# EUROPEAN PATENT APPLICATION

(11) **EP 2 524 999 A2**
(43) Date of publication of application: **21.11.2012**
(21) Application number: 12166918.8
(22) Date of filing: 07.05.2012
(51) Int. Cl.: E03B 3/03

(54) **Container for collecting water**

(30) Priority: 17.05.2011 FI 20110166
(71) Applicant: Houseman Oy, 18100 Heinola (FI)
(72) Inventor: Hietane, Jesse, FI-80110 Joensuu (FI); Hietanen, Juha, FI-18100 Heinola (FI)
(74) Representative: Jaala, Jukka Arvi

(57) **Abstract**

A container (1) for collecting water, comprising an open-top water container (2), as well as a bypass element (3), and a cover (4) to be placed on top of both the water container and the bypass element (3). The container (1) has its cover (4) comprising a bottom section (41) provided with a water outlet port (41a), and a lid section (42) connected with the bottom section (41) and provided with a water inlet port (42a). The location of the water outlet port (41a) in the bottom section (41) can be changed along that segment of a horizontal plane (H) extending across the water outlet port (41a), which remains inside the container (1), for changing the location of the water outlet port (41a) with respect to the water container (2) and the bypass element (3) present below the cover (4), whereby the water is channeled by way of the water outlet port (41a) either into the water container (2) or into the bypass element (3).

## Description

The invention relates to a container for collecting water, comprising an open-top water container, as well as a bypass element, and a cover to be placed on top of both the water container and the bypass element.

Collection of rainwaters is normally carried out with a barrel with no regard to the overflow of rainwater as the barrel fills up. Nor has any bypass facility been contemplated in the barrels for example in the anticipation of wintertime. Barrels may also constitute a hazard for children and domestic animals. There are also more sophisticated above-ground collection systems available in the marketplace, which make use of a valve installable inside a downpipe. The valve is used for channeling rainwater either into a container or past the container into a rainwater drainage system. A problem with such a solution is the inconvenient maintenance and cleaning of the valve, as well as whether the valve is capable of being installed in downpipes of diverse designs. Prior art is also represented by containers, which are provided with a bypass and overflow facility and which are permanently mounted on a downpipe. In the above solutions, the channeling of rainwater is implemented by baffles or vanes integrated with the container structure.

An objective of the invention is to eliminate the drawbacks present in the above prior art.

Accordingly, it is a general object of the invention to eliminate the channeling of rainwater into a container or the difficult-to-maintain and -install valves in a container.

Another object of the invention is to provide a container intended for collecting rainwater, wherein elements for channeling water to a bypass or overflow and into a rainwater tank are present in connection with the container itself, not in a downpipe. Hence, it is an object of the invention to provide a container, whose operation for the collection or for the bypass or overflow of rainwater is not dependent on the operation of a downpipe, in other words there is no need to use valves or the like installed in the downpipe for regulating the operation of the actual barrel intended for rainwater collection.

The basic idea regarding a container of the invention is setting it up under a downpipe, and providing the container with a cover which has a port in the floor of its bottom section. The cover has its lid section provided with a water collection basin, which gathers the water coming from the downpipe and guides it into the port present in the floor of the bottom section. The port present in the floor of the cover's bottom section enables clearing a water connection for the water to flow either into the container or into a bypass element of the container. The bypass element may also be an overflow element, having one inlet port in flow communication with a top section of the water container.

More specifically, the invention relates to a container intended for collecting water, which comprises an open-top water container, as well as a bypass element, and a cover to be placed on top of both the water container and the bypass element. The container has its cover comprising a bottom section provided with a water outlet port and a lid section in connection with the bottom section and provided with a water inlet port. The location of a water outlet port present in the bottom section can be changed along the inside-container confined segment of a horizontal plane extending across the water outlet port, such that the water outlet port changes its location with respect to the water container and the bypass element present below the cover, whereby the water is channeled by way of the water outlet part either into the water container or into the bypass element.

The invention relates also to a container intended for collecting water, which comprises an open-top water container, as well as a bypass element, and a cover to be placed on top of both the water container and the bypass element. Thus, in the container,
- the container has its cover comprising a bottom section provided with two or more water outlet ports, and a lid section mounted irremovably or removably on top of the bottom section and provided with a water inlet port;
- each currently open-state water outlet port in the bottom section can be selected with a closure element for thereby changing the location of an open water outlet port in a floor of the bottom section for changing a flow connection from the selected water outlet port to the water container or to the bypass element present below the cover, and for channeling water is by way of the open water outlet port either into the water container or into the bypass element.

The objectives for a container of the invention are attained by the foregoing.

The water coming from a downpipe is channeled onto a water-collecting cover deck without a permanent connection to the downpipe, in other words the operation of a downpipe is not linked with the operation of a container. In a solution of the invention, the shape of a downpipe does not play any role. Likewise, the position of a downpipe with respect to a container is open to free selection across the entire cover deck area.

The construction according to the invention provides an advantage of simple industrial design. The channeling of water into a water container or into a bypass element by a water-collecting cover (cover deck), and by circumventing the cover or a component thereof, is reliable in operation and convenient in maintenance. The operator is able to observe directly from the position of a cover or a component of the cover if water is on its way to a desired location, either into the container or into the bypass element.

In the invention, changing the position of a component, such as a screen, included in the cover, in the bottom section or in the lid section of the cover, is used for selecting whether the channeling of water is desired into a water container or directly into a bypass element. In a first position of the component included in the cover, in the bottom section or in the lid section of the cover, the water has access through a port in the floor of the bottom section into the water container, and further into an overflow element in case the water container is filled up. In a second position of the component included in the cover, in the bottom section or in the lid section of the cover, the water is channeled directly into the bypass element through a port in the floor of the bottom section. When the water outlet port present in the bottom section's floor is in flow communication with the water container, with the container's bypass element, or with the container's overflow element, said water outlet port is usually located above an upward-directed mouth of the water container, the bypass element, or the overflow element, such that a vertical line extending by way of said water outlet port passes through the mouth of the water container, the bypass element, or the overflow element.

As opposed to deflecting a component included in the cover, in the cover's bottom section, or in the cover's lid section, the water flow can be guided to a lower placed water container or bypass container by providing the cover's bottom section with two or more water outlet ports, the desired ones of which can be opened and closed. The water outlet ports opening into the bottom section's floor extend thereby through the entire cover, merging with the lid section's water inlet ports. Below and above the ports extending through the cover is located a baffle or a vane, the repositioning of which is used for blocking the flow to a first selected water inlet port of the cover's lid section or through a first selected water outlet port, and for clearing the flow to a second desired water inlet port of the lid section or through a second selected water outlet port for establishing a flow communication with the water container or with the bypass element.

The bypass element is a water conduit or a simple pipe. The bypass element can be a bypass conduit isolated permanently in the container for a separate facility with no water flow connection to the water container. The bypass pipe may also function as an overflow pipe, which has a flow connection to the container, being for example a T-branch pipe with one leg of the T-branch attached to the container, a second leg opening into a space below the lid section, and a third leg conducting the rainwater into the ground or into the rainwater drainage system of a building.

Preferably, the cover deck is designed for a funnel shape, such that the raised collars circling along the edge of the cover deck prevent the water arriving on top of the cover deck from flowing past the cover. In the cover's raised collar can be made a hole or recess for channeling the water in a desired direction in the event that rainwater-borne debris has blocked a port in the cover's floor. Preferably, the cover is elliptical in cross-section and the cover's bottom section is designed for an asymmetric funnel shape, such that its floor downgrades from a first end of the bottom section to a second end thereof.

In association with a water inlet port in the cover deck of a container lid can be installed a debris screen, making it easy for the operator to remove rainwater-borne debris from top of the cover deck.

The invention will now be described more closely with reference to the accompanying drawings, in which:
Fig. 1 shows a container in a partial longitudinal section view as seen from the side. The cover is positioned for channeling rainwaters into the water container.
Fig. 2 shows a container in a simplified partial longitudinal section view as seen from the side. The cover is positioned for channeling rainwaters directly into the bypass element.

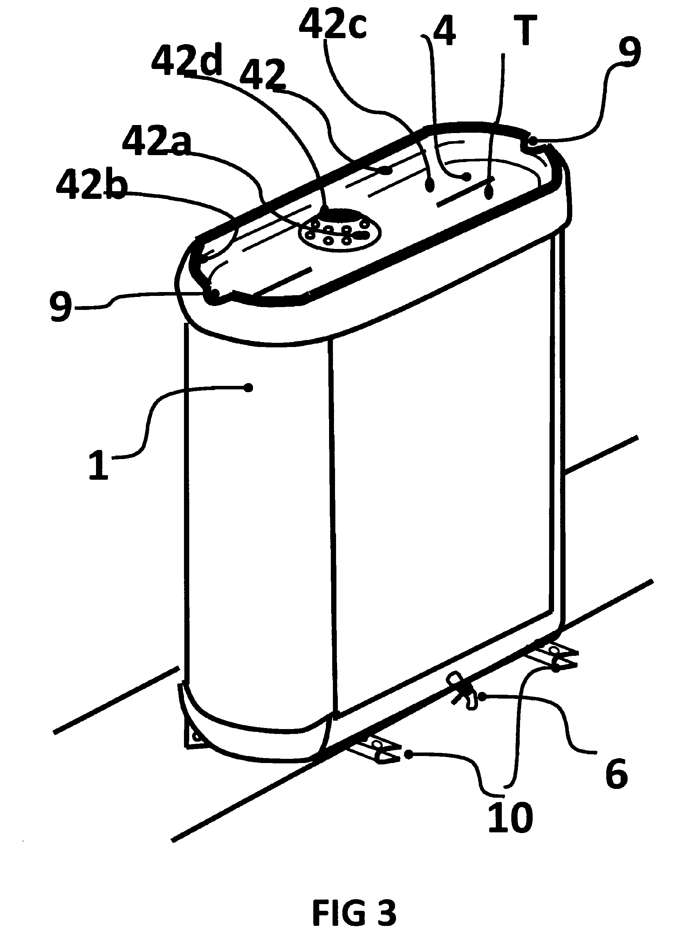

Fig. 3 shows a container obliquely from the front.

The illustrated container and its top cover are elliptical in cross-section. The figure shows an embodiment of the invention, in which a container 1, a for collecting water comprises an open-top water container 2, as well as a bypass element 3, and a cover 4 to be placed on top of both the water container and the bypass element (3). The container 1 has its cover 4 comprising a bottom section 41 provided with a water outlet port 41a, and a lid section 42 in connection with the bottom section 41 and provided with a water inlet port 42a. The location of the water outlet port 41a present in the bottom section 41 can be changed along that segment of a horizontal plane H extending across the water outlet port 41a which remains inside the container (1). Thus, the water outlet port 41a changes its location with respect to the water container 2 and the bypass element 3 present below the cover 4, whereby the water is channeled by way of the water outlet port 41a either into the water container 2 or into the bypass element 3.

Hence, the container 1, which constitutes the object of the invention, intended for collecting water, and provided with the cover 4, is of a two-component construction. A first component of the container 1 is the actual water container 2 and a second component functions as the bypass element 3. The bypass element 3 has a flow communication with the water container 2, whereby it functions at the same time as an overflow element 3a, thus enabling an overflow from the water container, as well as a bypass of rainwater for wintertime service. Accordingly, there is no need for a valve fitted in a downpipe 5, or baffles fitted in the container. The bypass element 3 is connected to a bypass pipe 7, which can be linked to the rainwater piping system of a building, or to a pipe for delivering rainwater further away from the building for its recharge into the ground.

The container 1 is narrow in shape, more or less elliptical or oval in cross-section, which improves safety for example from the standpoint of children or domestic animals.

The container 1 is equipped with the cover 4, onto whose cover deck 4c rainwater is channeled or arrives for example from a downpipe. The cover 4 has its lid section 42 consisting of a cover deck 42c, along whose outer edges circles a collar 42b directed upward from the cover deck 42c. Hence, the collar 42b, which surrounds the cover deck 42c, defines out of the cover deck a water collection basin T for gathering rainwater. A normal way of installing the container 1 is such that the downpipe 5 is severed and the container (1) is placed under the downpipe 5 without permanent connection.

The cover 4 of the container 1 has in a middle section of its cover deck 42c provided a water inlet port 42a, which is also provided with a screen 42d separating debris from rainwater. The collar has recesses 9 formed therein for discharging rainwater onto the sides in case the screen 42d is blocked. The cover 4, which is provided with the water collection basin T, channels rainwaters either into the water container 2 or into the bypass element 3 as necessary. The bottom section 41 of the cover 4 is funnel-shaped in its overall design, such that the bottom section 41 has its floor 41b in an inclined position relative to the plane of the cover, sloping downward as the floor 41 is viewed from an edge of the lid section 42 located further away from the water outlet port 41a. At a most distant point 41d of the bottom section 41, when viewed from the cover deck 42c, i.e. at the lowest point of the cover, are located water outlet ports 41a.

The channeling of rainwater, either into the water container 2 or directly into the bypass element 3, is selected by changing the attitude of the cover 4, whereby, at the same time, the water outlet port 41a present in the bottom section's floor 41b, at the lowest point of the floor, changes its position with respect to the water container 2 and the bypass element located underneath the cover. Across the water outlet port 41a of the bottom 41 extends a horizontal plane H and, because the port is located at the lowest point of the asymmetrically funnel-shaped bottom 41, it is on this horizontal plane H, inside the container, on which all possible positions of the port 41a are located.

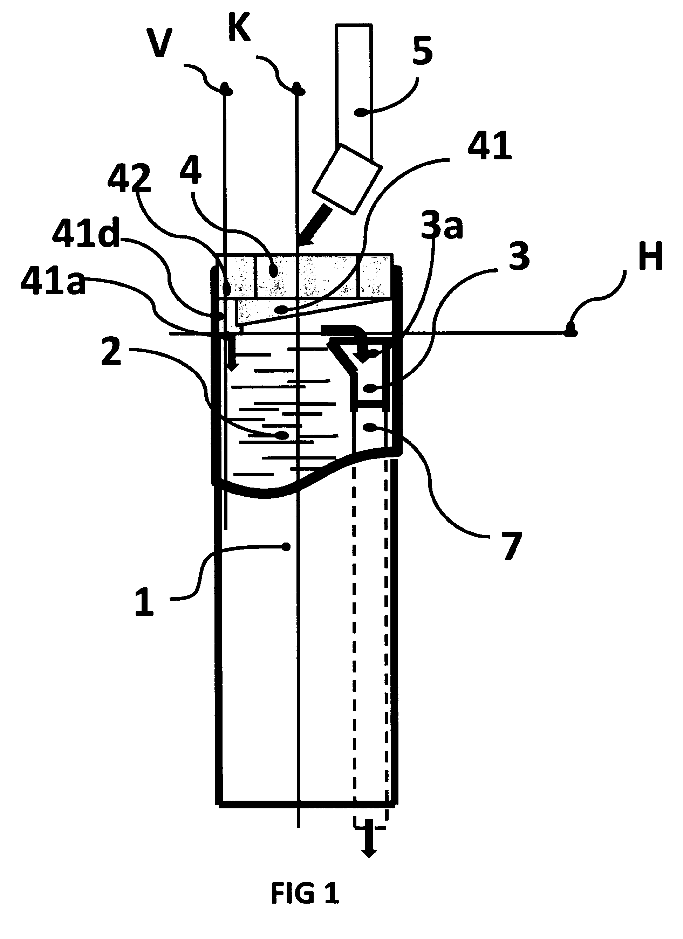

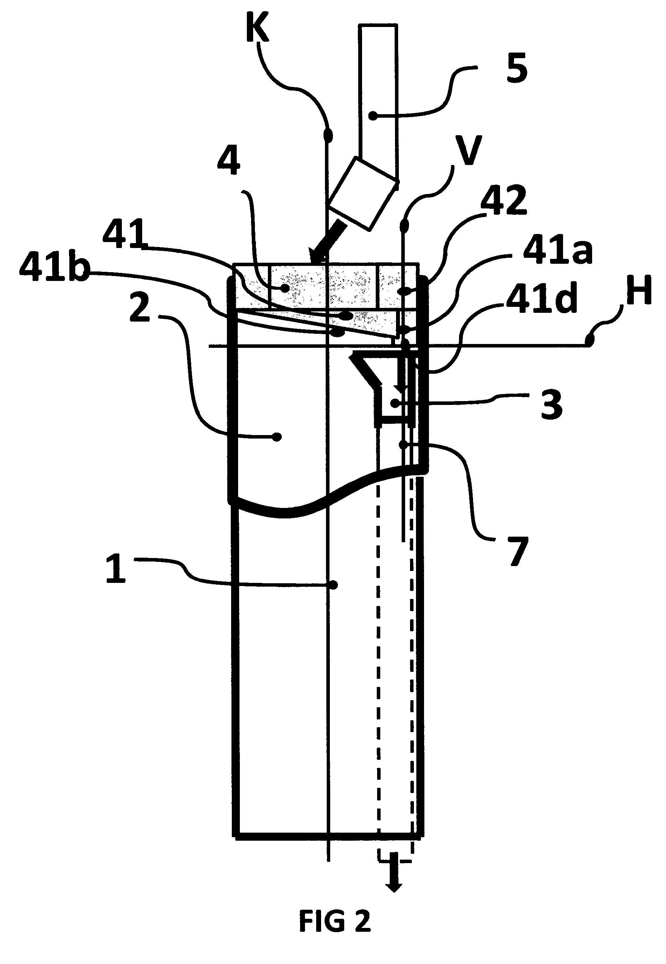

In the illustrated embodiment of the invention, the cover 4 is rotated through 180 degrees, whereby the water outlet port 41a will be placed either above a mouth of the water container or a mouth of the bypass element. Hence, a virtual vertical straight line V, which runs across the water outlet port 41a of the cover 4, extends to the mouth of the water container 2 present below the cover (fig. 1) or to the mouth of the bypass element 3 (fig. 2).

The channeling of rainwater either into the water container 2 or into the bypass element 3 can also be implemented by changing the attitude of a component of the cover 4, for example the screen 42a of the cover deck 4c.

The funnel-shaped bypass element 3 of the container is designed as an overflow element 3a by having its top rim below a top rim of the container 1, whereby, once the water container 2 is filled up, the excess water runs into the overflow element 3a. The rainwater arriving by way of the overflow element 3a of the container 1 is channeled in a controlled manner by means of a bypass pipe 7 associated with the overflow element into the actual rainwater drainage system of a building or into the ground. The container 1 has been given a symmetrical shape for its unrestricted installation on a building wall and for fitting it equally well either on a right-handed or left-handed corner.

The container 1 is provided with a drain valve 6 mounted on a bottom part of the water container 2. In summertime service, collected rainwater is taken from the valve 6 for practical use, and in wintertime service the valve 6 is left open. By leaving the valve 6 open, it is ensured that the water container 2 remains empty with no occurrence of damage due to the freezing of water.

The container 1 for collecting water can be manufactured for example from aluminum or special plastics, whereby its appearance and weather resistance enable its mounting permanently on an exterior wall of the building.

The container 1 is installed under the downpipe 5 by means of fasteners 10 attachable to a wall, or by placing the container 1 directly on the ground.

## Claims

1. A container (1) for collecting water, comprising an open-top water container (2), as well as a bypass element (3), and a cover (4) to be placed on top of both the water container and the bypass element (3), **characterized in that**
- the container (1) has its cover (4) comprising a bottom section (41) provided with a water outlet port (41a), and a lid section (42) connected with the bottom section (41) and provided with a water inlet port (42a);
- the location of the water outlet port (41a) in the bottom section (41) can be changed along that segment of a horizontal plane (H) extending across the water outlet port (41a), which remains inside the container (1), for changing the location of the water outlet port (41a) with respect to the water container (2) and the bypass element (3) present below the cover (4), whereby the water is channeled by way of the water outlet port (41a) either into the water container (2) or into the bypass element (3).

2. A container (1) as set forth in claim 1 for collecting water, especially rainwater, **characterized in that** the location of the water outlet port (41a) present in the bottom section (41) of the cover (4) can be changed with respect to the water container (2) and the bypass element (3) present below the cover (4) by rotating the entire cover (4) of the container (1), or the bottom section (41) rotatably connected to a lid section (42) of the cover, approximately in a horizontal plane around its center axis (K).

3. A container (1) as set forth in claim 1 or 2 for collecting water, especially rainwater, **characterized in that**, when the cover (4) of the container (1), the bottom section (41) of the cover, or a component of the cover, such as a screen (8), is pivoted approximately in a horizontal plane around its vertical axis so as to change the location of the water outlet port (41a) with respect to the water container (2) and the bypass element (3) present below the cover element (4) for channeling water from the water outlet port (41a) either into the water container (2) or into the bypass element (3), a virtual vertical straight line (V), which runs across the water outlet port (41a) present in the bottom section (41) of the cover (4), extends to a mouth of the water container (2) present below the cover or to a mouth of the bypass element (3).

4. A container (1) for collecting water, comprising an open-top water container (2), as well as a bypass element (3), and a cover (4) to be placed on top of both the water container (2) and the bypass element (3), **characterize** in that
- the container (1) has its cover (4) comprising a bottom section (41) provided with two or more water outlet ports (41a), and a lid section (42) mounted irremovably or removably on top of the bottom section (41) and provided with a water inlet port (42a),
- each currently open-state water outlet port (41a) in the bottom section (41) can be selected with a closure element for thereby changing the location of an open water outlet port (41a) in a floor (41b) of the bottom section (41) for changing a flow connection from the selected water outlet port (41a) to the water container (2) or to the bypass element (3) present below the cover (4), and for channeling water by way of the open water outlet port (41a) either into the water container (2) or into the bypass element (3).

5. A container as set forth in any of the preceding claims, **characterized in that** the cover (4) has its lid section (42) comprising a cover deck (42c), which is surrounded along its outer edges by a collar (42b) directed upward from the cover deck (42c), such that the cover deck (42c) and its surrounding collar (42b) define jointly a water collection basin (T).

6. A container (1) as set forth in any of the preceding claims, **characterized in that** the bottom section (41) of the cover (4) is funnel-shaped in its overall design, such that the bottom section (41) has its floor (41b) in an inclined position relative to the plane of the cover, sloping downward as the floor (41b) is viewed from an edge of the lid section (42) located further away from the water outlet port (41a), whereby at a furthest point (41d) of the bottom section (41), when viewed from a cover deck (42c), are located one or more water outlet ports (41a).

7. A container (1) as set forth in claim 6 for collecting water, especially rainwater, **characterized in that** the cover (4), or the bottom section (41) rotatably connected to the lid section, is rotated about 180 degrees in a horizontal plane around its vertical center axis (K).

8. A container (1) as set forth in any of the preceding claims, **characterize** in that the bypass element (3) is an overflow element (3a), which is in flow communication with the water container (2), preferably with a top section of the water container (2).

9. A container as set forth in claim 8, **characterized in that** the overflow element (3a) has its top edge approximately positioned below a top edge of the water container (2), such that, when the water discharging by way of the water inlet port (42a) of the cover (4) from the water collection basin (T) of the water container has been channeled into the water container (2), the excess water discharges from the water container (2) into said overflow element (3a).

10. A container as set forth in claim 8 or 9, **characterized in that** the overflow element (3a) comprises an open-top water channel or pipe, such as a T-pipe, which has a water outlet end and two water inlet ends, of which a first water inlet end is in flow communication with the water container (2) and a second water inlet end is upward open to enable its connection for flow communication with water flowing by

11. A container (1) as set forth in any of the preceding claims, **characterized in that** the bypass element (3) has a water inlet end and a water outlet end, and the water outlet end is upward open to enable its connection for flow communication with water flowing by way of the port (41a) of the bottom section (41), nor has the bypass element (3) any flow connection to the water container (2).

12. A container (1) as set forth in any of the preceding claims, **characterized in that** the bypass element (3) of the water container (2) concentrates bypass and overflow waters in one location, such that the waters can be channeled by means of a pipe or a gutter into the rainwater drainage system of a building or further away from the building.

13. A container (1) as set forth in any of the preceding claims, **characterized in that** the cover (4) has the upward-directed, raised collar (42b) of its lid section (42) provided with a hole or a recess lower than the rest of the collar, which enable water to discharge thereby out of the water collection basin (T) of the cover.

14. A container (1) as set forth in any of the preceding claims, **characterized in that** in connection with the water inlet port (42(a) of the lid section (42) is a screen (42d) separating debris from rainwater.

15. A container (1) as set forth in any of the preceding claims, **characterized in that** the container (1) is designed to be symmetrical in terms of its lateral and longitudinal axes and the container (1) is capable of being installed on top of a building-mounted support, on a wall of the building, whereby the collected rainwater is exploitable by its own pressure.
